# EUROPEAN PATENT SPECIFICATION

(11) **EP 3 077 468 B1**
(45) Date of publication and mention of the grant of the patent: **28.02.2018**
(21) Application number: 14806600.4
(22) Date of filing: 01.12.2014
(51) Int. Cl.: C09D 183/04, C08K 5/56

(54) **A METHOD FOR COATING AN AGED COATING LAYER ON A SUBSTRATE, AND A COATING COMPOSITION SUITABLE FOR USE IN THIS METHOD**
VERFAHREN ZUR BESCHICHTUNG EINER GEALTERTEN BESCHICHTUNG AUF EINEM SUBSTRAT UND BESCHICHTUNGSZUSAMMENSETZUNG ZUR VERWENDUNG IN DIESEM VERFAHREN
PROCÉDÉ DE REVÊTEMENT D'UNE COUCHE DE REVÊTEMENT VIEILLIE SUR UN SUBSTRAT ET COMPOSITION DE REVÊTEMENT APPROPRIÉE POUR ÊTRE UTILISÉE DANS CE PROCÉDÉ

(30) Priority: 03.12.2013 EP 13195539
(43) Date of publication of application: 12.10.2016
(73) Proprietor: Akzo Nobel Coatings International B.V., 6824 BM Arnhem (NL)
(72) Inventor: JONES, Phillip Keith, Jarrow Tyne and Wear NE32 4UX (GB); HAMBLETT, Paul James, Jarrow Tyne and Wear NE32 5HY (GB); HAMILTON, Lindsay, Crook Durham DL15 0UN (GB)
(74) Representative: Akzo Nobel IP Department
(86) International application number: PCT/EP2014/076120
(87) International publication number: WO 2015/082408

(56) References cited:
- US-A1- 2011 009 558
- US-A1- 2013 142 949

## Description

The invention relates to a novel method of coating an aged coating layer on a substrate. The coating composition applied according to the method is suitable for inhibiting fouling on the surface of a man-made structure in an aquatic environment or for forming an intermediate coating (i.e. a tie-coat coating) in a multilayer coating system. The invention therefore also relates to a fouling-release coating composition or an intermediate coating composition, and to a substrate, for example a man-made substrate such as a vessel hull, which has been coated according to the method and with the coating composition as described herein.

Man-made structures such as boat and ship hulls, buoys, drilling platforms, dry dock equipment, oil and gas production rigs and floating storage vessels, aquaculture equipment and netting, the immersed portions of energy generation devices, and pipes which are immersed in an aquatic environment (i.e. a marine environment) are prone to fouling by biofilms and aquatic organisms such as green and brown algae, barnacles, mussels, and the like. Such structures are commonly of metal, but may also comprise other structural materials such as concrete. This fouling is a nuisance on boat hulls, because it increases frictional resistance during movement through the water, the consequence being reduced speeds and increased fuel costs. It is a nuisance on static structures such as the legs of drilling platforms and oil and gas production, refining and storage rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence that flow rates are reduced.

Certain coatings, for example elastomers such as silicone rubbers, resist fouling by aquatic organisms. These are described in GB 1,307,001 and US 3,702,778. Such coatings are, generally hydrophobic and are believed to present a surface which physically deters settlement and/or to which the organisms cannot easily adhere, and they can accordingly be called foul-release coatings or fouling release coatings rather than anti-fouling coatings. Foul-release properties can be characterised by barnacle adhesion measurements, for example, ASTM D 5618-94. The following barnacle adhesion values have been recorded by this method: Silicone surface (0.05 MPa), Polypropylene surface (0.85 MPa), Polycarbonate surface (0.96 MPa), Epoxy surface (1 .52 MPa) and Urethane surface (1 .53 MPa) (J.C. Lewthwaite, A.F. Molland and K. W. Thomas, "An Investigation into the variation of ship skin fictional resistance with fouling", Trans. R.I.N.A., Vol. 127, pp. 269- 284, London (1984)). As an indication of whether or not a coating may be considered to be foul-release: a foul-release coating usually has a mean barnacle adhesion value of less than 0.4MPa.

WO 02/074870 describes an alternative fouling-release composition which has low surface energy and suitable elastomeric properties. This anti-fouling composition comprises a cured or crosslinked polymer, which is free from perfluoropolyether moieties, and a fluorinated alkyl- or alkoxy-containing polymer or oligomer.

WO 03/024106 describes a fouling-release composition which comprises a curable or crosslinkable polymer and specific sterol or sterol derivatives, and in particular modified forms of lanolin.

However fouling-release coatings only have a finite specified in-service life time. Typically the specified in-service life time of a fouling-release coating is about five years. At the end of this in-service period it is common practice to apply a fresh coat of foul release to maintain performance. A particular problem seen when overcoating an aged coating, in particular an aged foul-release coating in those areas on a vessel that are not permanently immersed in water, such as the boot-top, splash zone and exposed areas, is poor adhesion of the new coating layer to the aged coating layer. By aged-coating layer, typically this is understood to mean a coating layer which has not been freshly applied, in particular, applied more than 6 months previously.

The boot top area of the vessel's hull is the area of the vessel between the deep load line and the light load line which is alternately immersed and unimmersed in the water depending on the loading of cargo and its ballast condition. Consequently, the boot top area will alternate between being wet and dry, is subject to atmospheric exposure, and as a result suffers from serious problem with adhesion of the new foul release coating layer to the aged foul release coating layer.

Currently, the only known way to ensure acceptable adhesion of the new coating scheme in an area that is alternately immersed and unimmersed, such as the boot top area of the hull, is to remove the aged coating scheme and then to re-apply a new coating scheme. This is costly and time-consuming, however no other known option exists. Similar problems apply where coatings are applied to non-permanently water-immersed areas of objects other than vessels.

Surprisingly, the inventors have prepared a coating composition comprising a curable or crosslinkable organosiloxane polymer and a specific combination of other materials which has significantly improved adhesion of the new coating layer formed from this coating composition to the aged coating layer compared to coatings which do not comprise this combination of components. The improvement in adhesion means that it is no longer necessary to remove the aged coating layer, before applying a new layer of coating composition. This results in a saving in time, resources and a reduction in the amount of volatile organic substances that are released into the atmosphere.

In a first aspect, the invention relates to a method of coating an aged coating layer on a substrate by
a) providing a coating composition comprising curable or crosslinkable organosiloxane polymer, an organobismuth compound and a silane coupling agent,
b) applying a layer of the coating composition to an aged coating layer, and
c) allowing the coating composition to cure and/or crosslink to form a cured and/or crosslinked coating layer.
wherein an aged coating layer is a coating layer applied more than 6 months previously.

The phrase "applying a layer of the coating composition to an aged coating layer" should be understood to include (i) applying a layer of the coating composition to portion of the aged coating layer and (ii) applying a layer of the coating composition to the entire aged coating layer.

Typically, the aged coating layer comprises a cured or crosslinked organosiloxane polymer.

The aged coating layer may be an aged fouling-release coating layer located on a region of a man-made structure which is to be alternately immersed and unimmersed in the water (i.e. not permanently immersed). This is sometimes referred to herein as "a non-permanently immersed region of man-made structure". An example of such a man-made structure that is alternately immersed and unimmersed in the water is a hull of a vessel.

The cured coating layer formed in step c) may be a fouling-release coating capable of inhibiting fouling in an aquatic environment.

Alternatively, the cured coating layer formed in step c) may be further (fully or partially) coated with one or more layer(s) of coating composition. In this case, the cured coating layer formed in step c) is an intermediate coating layer and may sometimes be referred to as a tie-coat layer. The one or more layer(s) of coating composition may be a fouling release coating composition and/or comprise a curable or crosslinkable organosiloxane polymer. Optionally, the one or more layer(s) of coating composition may be the coating composition of the present invention as defined herein.

The cured coating layer formed in step c) has good adhesion to the aged foul release coating layer to which it is applied. An ADHESION TEST is described in the Examples below. A coating having good or perfect adhesion means a coating which scores 4 or 5 in the ADHESION TEST. A coating having fair/reasonable adhesion scores 3 in the ADHESION TEST. A coating having poor adhesion scores less than 3 in the ADHESION TEST.

The silane coupling agent may be, for example an amino-functional silane or an epoxy-functional silane. The amino or epoxy functional silane may comprise C₂-C₁₀-alkoxy-groups.

The silane coupling agent may have the general structure R³-Si-X₃, where R³ is a reactive organofunctional group and X is a hydrolysable group.

X is typically an alkoxy, acyloxy, halogen or amine. For example, the alkoxy may be a C₁-C₆ alkoxy (e.g. a methoxy or ethoxy group); the acyloxy may be a phenyloxy, and; the halogen may be may be a chloride or a bromide.

R³ may be an optionally substituted alkyl or an aryl group containing 1-10 carbon atoms, e.g. 2-10 carbon atoms. If R³ is a substituted alkyl or an aryl group containing 1-10 carbon atoms, R³ is preferably substituted with one or more amine or epoxy functional groups. In these cases, the silane coupling agent may then be described as an amino functional silane or an epoxy functional silane respectfully.

Suitably, R³ is an alkyl or an aryl group containing 1-10 carbon atoms substituted with one or more amine groups, or an aryl group (e.g. phenyl group) containing 5-10 carbon atoms substituted with one or more amine groups. The amine groups may be one or more primary, secondary or tertiary amine groups.

A suitable amine functional silane coupling agent for use in the coating composition of the present invention has the structure: (R⁴-O)₃-Si-R⁵-NH₂, wherein R⁴ is an alkyl group containing 1 to 10 carbon atoms, preferably 1 to 6 carbon atoms and most preferably is a methyl group, R⁵ is an alkylene moiety containing 1 to 10 carbon atoms optionally substituted with an amine group. An example of an amine functional silane coupling agent is (MeO)₃-Si-(CH₂)₃-NH-(CH₂)-NH₂.

Other examples of the amino functional silane compounds include, but are not limited to, N-2-aminoethyl-3-aminopropyltrimethoxysilane, aminopropyltrimethoxysilane, aminopropylmethyldimethoxysilane, aminopropyltriethoxysilane, aminopropylmethyldiethoxysilane, aminophenyltrimethoxysilane, 4-amino-3-dimethylbutyltrimethoxysilane, 4-amino-3-dimethylbutylmethyldimethoxysilane, 4-amino-3-dimethylbutyltriethoxysilane, 4-amino-3-dimethylbutylmethyldiethoxysilane, N-phenyl-aminopropyltrimethoxysilane, N-naphthyl- aminopropyltrimethoxysilane, N-phenyl-aminopropylmethyldimethoxysilane, N-naphthyl- - aminopropylmethyldimethoxysilane, N-(n-butyl) aminopropyltrimethoxysilane, N-(n-butyl) aminopropylmethyldimethoxysilane, N-ethyl- aminopropyltrimethoxysilane, N-ethyl- -aminopropylmethyldimethoxysilane, N-methyl-aminopropyltrimethoxysilane, N-methyl-gamma aminopropylmethyldimethoxysilane, N-beta -(aminoethyl)-aminopropyltrimethoxysilane, N-beta-(aminoethyl)-aminopropyltriethoxysilane, N-beta (aminoethyl)aminopropylmethyldimethoxysilane, N-beta-(aminoethyl)aminopropylmethyldiethoxysilane, N-3-[amino(dipropyleneoxy)] aminopropyltrimethoxysilane, (aminoethylaminomethyl)phenethyltrimethoxysilane, N-(6-aminohexyl)aminopropyltrimethoxysilane, N-(2-aminoethyl)-11-aminoundecyltrimethoxysilane, bis(trimethoxysilylpropyl)amine, (3-trimethoxysilylpropyl)diethylenetriamine, (aminoethylamino)-3-isobutyldimethylmethoxysilane, (cyclohexylaminomethyl)triethoxysilane, (n,n-diethyl-3-aminopropyl)trimethoxysilane, (phenylaminomethyl)methyldimethoxysilane, 11-aminoundecyltriethoxysilane, 2-(2-pyridylethyl)thiopropyltrimethoxysilane, 2-(4-pyridylethyl)triethoxysilane, 2-(trimethoxysilylethyl)pyridine, 3-(1,3-dimethylbutylidene)aminopropyltriethoxysilane, 3-(2-imidazolin-1-yl)propyltriethoxysilane, 3-(m-aminophenoxy)propyltrimethoxyaminopropylsilanetriol, 3-(m-aminophenoxy)propyltrimethoxysilane, 3-(n,n-dimethylaminopropyl)trimethoxysilane, 3-(n-allylamino)propyltrimethoxysilane, 3-aminopropyldiisopropylethoxysilane, 3-aminopropyldimethylethoxysilane, 3-aminopropylmethyldiethoxysilane, 3-aminopropyltriethoxysilane, 3-aminopropyltrimethoxysilane, 3-aminopropyltris(methoxyethoxyethoxy)silane, 4-aminobutyltriethoxysilane, acetamidopropyltrimethoxysilane, aminopropylsilanetriol, bis(2-hydroxyethyl)-3-aminopropyltriethoxysilane, bis(methyldiethoxysilylpropyl)amine, bis(methyldimethoxysilylpropyl)n-methylamine, bis(triethoxysilylpropyl)amine, bis(trimethoxysilylpropyl)urea, bis[(3-trimethoxysilyl)propyl]ethylenediamine, bis[3-(triethoxysilyl)propyl]urea, diethylaminomethyltriethoxysilane, n-(2-aminoethyl)-3-aminoisobutylmethyldimethoxysilane, n-(2-aminoethyl)-3-aminopropylmethyldimethoxysilane, n-(2-aminoethyl)-3-aminopropylsilanetriol, n-(2-aminoethyl)-3-aminopropyltriethoxysilane, n-(2-aminoethyl)-3-aminopropyltrimethoxysilane, n-(3-aminopropyldimethylsila)aza-2,2-dimethyl-2-silacyclopentane, n-(3-triethoxysilylpropyl)4,5-dihydroimidazole, n-(3-trimethoxysilylpropyl)pyrrole, n-(6-aminohexyl)aminomethyltriethoxysilane, n-(6-aminohexyl)aminomethyltrimethoxysilane, n,n,n-trimethyl-3-(trimethoxysilyl)-1-propanaminium, n,n-dioctyl-n'-triethoxysilylpropylurea, n-[5-(trimethoxysilyl)-2-aza-1-oxopentyl]caprolactam, n-3-[(amino(polypropylenoxy)]aminopropyltrimethoxysilane, n-butylaminopropyltrimethoxysilane, n-cyclohexylaminopropyltrimethoxysilane, n-ethylaminoisobutylmethyldiethoxysilane, n-ethylaminoisobutyltrimethoxysilane, n-phenylaminomethyltriethoxysilane, n-trimethoxysilylpropylcarbamoylcaprolactam, ureidopropyltriethoxysilane, ureidopropyltrimethoxysilane and the like. Preferably the aminosilane is one or more of N-2-aminoethyl-3-aminopropyltrimethoxysilane, 3-Aminopropyltriethoxysilane, 3-Aminopropyltrimethoxysilane or bis[3-(Trimethoxysilyl)Propyl]amine. Most preferably the aminosilane comprises N-2-aminoethyl-3-aminopropyltrimethoxysilane.

The coating composition of the present invention must also comprise an organobismuth compound. If an organobismuth compound is not also in the coating composition comprising a curable or crosslinkable organosiloxane polymer, even if the silane coupling agent is present in large amounts, adhesion of the coating to an aged-coating layer is unacceptable and delamination of the new coating occurs. The problem of is more prominent at areas that are not permanently immersed in water, such as the boot-top, splash zone and exposed areas of the vessel.

The organobismuth compound may be a carboxylate of bismuth (Bi³⁺). For example a bismuth carboxylate may have the following formula Bi³⁺ -(CO)O-R⁵, wherein R⁵ is a linear or branched alkyl group comprising between 2 and 20 carbon atom, i.e. 4 to 15 carbon atoms. Examples of such catalysts are bismuth(2-ethylhexanoate), bismuth octanoate, bismuth neodecanoate, bismuth tetramethylheptanedioate, bismuth naphthenate, bismuth acetate, bismuth citrate, bismuth salicylate, bismuth subsalicylate and bismuth trifluoromethanesulfonate. Examples of other organobismuth coupounds include bismuth gallate, dichlorodiphenyl(p-tolyl)bismuth, dichlori(o-tolyl)bismuth, dichlorotris(4-chlorophenyl)bismuth and bismuth tris(2,2,6,6-tetramethyl-3,5-heptanedionate. The preferred organobismuth compounds are bismuth neodecanoate and Bismuth(III) acetate, most preferably bismuth neodecanoate.

Typically the coating composition of the present invention comprises up to 4.0 weight%, for example 0.1-2.0 weight%, 0.5-2.0 weight%, 0.2-2.0 weight%, of the organobismuth compound wherein weight is based on the total weight of the coating composition.

Typically the coating composition of the present invention comprises up to 4.0 weight % for example 0.1-1.0 weight % or 0.1-0.5 weight % of the silane coupling agent, wherein weight is based on the total weight of the coating composition.

For example, therefore, the coating composition of the present invention may comprise 0.2-2.0 weight% of the organobismuth compound, and 0.1-1.0 weight % of the silane coupling agent, wherein weight is based on the total weight of the coating composition.

The coating composition may also comprise one or more further catalysts. Examples of other catalysts include transition metal compounds, metal salts and organometallic complexes of various metals, such as tin, iron, lead, barium, cobalt, zinc, antimony, cadmium, manganese, chromium, nickel, aluminium, gallium, germanium and zirconium. The salts preferably are salts of long-chain carboxylic acids and/or chelates or organometal salts.

Examples of suitable catalysts include for example, dibutyltin dilaurate, dibutyltin dioctoate, dibutyl tin diacetate, dibutyl tin 2-ethylhexanoate, dibutyltin di neodecanoate, dibutyl tin dimethoxide, dibutyltin dibenzoate, dibutyltin acetoacetonate, dibutyltin acetylacetonate, dibutyltin alkylacetoacetonate, dioctyltin dilaurate, dioctyltin dioctoate, dioctyl tin diacetate, dioctyl tin 2-ethylhexanoate, dioctyltin di neodecanoate, dioctyl tin dimethoxide, dioctyltin dibenzoate, dioctyltin acetoacetonate, dioctyltin acetylacetonate, dioctyltin alkylacetoacetonate, dimethyltin dibutyrate, dimethyltin bisneodecanoate, dimethyltin dineodecanoate, tin naphthenate, tin butyrate, tin oleate, tin caprylate, tin octanoate, tin strearate, tin octoate, iron stearate, iron 2-ethylhexanoate, lead octoate, lead 2-ethyloctoate, cobalt-2-ethylhexanoate, cobalt naphthenate, manganese 2-ethylhexanoate, zinc 2-ethylhexanoate, zinc naphthenate, zinc stearate, metal triflates, triethyl tin tartrate, stannous octoate, carbomethoxyphenyl tin trisuberate, isobutyl tin triceroate.

Further examples of suitable catalysts include organotitanium, organzirconium and organohafnium compounds and titanates and zirconate esters such as, titanium naphthenate, zirconium naphthenate, tetrabutyl titanate, tetrakis(2-ethylhexyl)titanate, triethanolamine titanate, tetra(isopropenyloxy)-titanate, titanium tetrabutanolate, titanium tetrapropanolate, titanium tetraisopropanolate,tetrabutyl zirconate, tetrakis(2-ethylhexyl) zirconate, triethanolamine zirconate, tetra(isopropenyloxy)-zirconate, zirconium tetrabutanolate, zirconium tetrapropanolate, zirconium tetraisopropanolate and chelated titanates such as diisopropyl bis(acetylacetonyl)titanate, diisopropyl bis(ethylacetoacetonyl)titanate and diisopropoxytitanium bis(ethylacetoacetate), and the like.

Further examples of suitable catalysts include amines such as laurylamine, tertiary amines such as triethylamine, tetrametylethylenediamine, pentamethyldiethylenetriamine and 1,4-ethylenepiperazine or quaternary ammonium compounds such as tetramethylammonium hydroxide.

Further examples of suitable catalysts include guanidine based catalysts such as 1 butyl-2,3-dicyclohexyl-1-methyl guanidine.

Further examples of suitable catalysts include organo-phosphates such as bis(2-ethyl-hexyl) hydrogen phosphate, (trimethylsilyl)octylphosphonic acid octylphosphonic acid, bis(Trimethylsilyl)octylphosphate and (2-ethyl-hexyl) hydrogen phosphonic acid.

The catalyst can alternatively be a Lewis acid catalyst for example BF₃, B(C₆F₅)₃, FeCl₃, AlCl₃, Zincl₂, ZnBr₂ or boron, aluminium, gallium, indium or thallium compounds with a monovalent aromatic moiety preferably having at least one electron-withdrawing element or group such as -CF₃, -NO₂ or -CN, or substituted with at least two halogen atoms.

Further, the catalyst may comprise a halogenated organic acid which has at least one halogen substituent on a carbon atom which is in the α-position relative to the acid group and/or at least one halogen substituent on a carbon atom which is in the β-position relative to the acid group, or a derivative which is hydrolysable to form such an acid under the conditions of the condensation reaction. Alternatively, the catalyst may be as described in any of: EP1254192, WO 2001/49774, US 2004/006190, WO 2007/122325A1, WO 2008/132196, WO 2008/055985A1, WO 2009/106717A2, WO 2009/106718A2, WO 2009/106719A1, WO 2009/106720A1, WO 2009/106721A1, WO 2009/106722A1, WO 2009/106723A1, WO 2009/106724A1, WO 2009/103894A1, WO 2009/118307A1, WO 2009/133084A1, WO 2009/133085A1, WO 2009/156608A2, WO 2009/156609A2, WO 2012/130861A1 and WO 2013/013111.

The curable or crosslinkable polyorganosiloxane polymer used in the coating composition of the present invention may be one or a mixture of organosiloxane polymer(s). The polyorganosiloxane polymer(s) may have one or more, more preferably two or more reactive functional groups such as hydroxyl, alkoxy, acetoxy, carboxyl, hydrosilyl, amine, epoxy, vinyl or oxime functional groups.

By curable or crosslinkable we mean a polymer which is capable of toughening or hardening to form a coating as a result of a chemical reaction between functional groups located on the polymer and/or a crosslinker, by solvent evaporation or other means.

The organosiloxane polymer may comprise a repeating unit of the general structure -[SiR¹R²-O]- wherein R¹ and R² are independently selected from hydrogen, alkyl, aryl, aralkyl, and a vinyl containing moiety. Preferably R¹ and R² are independently selected from an alkyl selected from C₁-C₆ alkyl, a phenyl, a C₁-C₆ alkylphenyl or a C₁-C₆ alkylene.

R¹ and R² may be independently selected from methyl and phenyl. Alternatively, the organosiloxane polymer is a polymer wherein R¹ and R² are both methyl.

For instance condensation curable polydimethylsiloxanes (di-hydroxy-functional) could be used, which are crosslinked with an alkylorthosilicate such as tetraethyl orthosilicate.

Another organosiloxane polymer contains siloxane groups which is substantially free of carbon in the backbone. e.g. polydimethylsiloxane (wherein substantially free of carbon means that less than 1 wt.% of carbon is present). Other suitable polymers are those as disclosed in WO 99/33927, particularly the polymers disclosed on page 12, lines 23-31, viz. an organohydrogenpolysiloxane or a polydiorganosiloxane. The polysiloxane may, for example, comprise a copolymer of diorganosiloxane units with organohydrogen siloxane units and/or with other diorganosiloxane units, or a homopolymer or organohydrogen siloxane units or of diorganosiloxane units.

Polysiloxanes that can be crosslinked by a hydrosilylation reaction can also be used. Such polymers are known as 'hydride silicone' and are disclosed, for instance, in EP 874032-A2 on page 3, viz. a polydiorganosiloxane of the formula R' - (SiOR'₂) - SiR'₃, wherein each R' is independently a hydrocarbon or fluorinated hydrocarbon radical, at least two R' radicals per molecule being unsaturated, or hydrogen, at least two R' radicals per molecule being hydrogen, and m has an average value in the range of about 10-1,500. Cyclic polydiorganosiloxanes analogous to those of formula above may also be employed. The hydride silicone is preferably a hydrogen polydimethylsiloxane.

Furthermore, the polyorganosiloxane may also comprise two or more polyorganosiloxanes of different viscosity.

Alternatively, polyorganosiloxane may be the polymer as described in WO2008132196, wherein the polymer is a polyorganosiloxane polyoxyalkylene block copolymer of the form PS - (A - PO - A - PS)ₙ, wherein PS represents a polyorganosiloxane block, PO represents a polyoxyalkylene block, A represents a divalent moiety, and n has a value of at least 1, or 2 or more.

The polymer has two or three reactive groups X on a polyorganosiloxane block per molecule which may self-condense and crosslink, and may optionally be crosslinked with another organosilicon crosslinking agent containing two or more groups Y which are reactive with the said groups X.

Preferably the polyorganosiloxane(s) polymer(s) is(are) present in the coating composition an amount of 30 to 90 weight%, based on the total weight of the coating composition.

The coating composition may also comprise fillers. Examples of suitable fillers are barium sulphate, calcium sulphate, calcium carbonate, silicas or silicates (such as talc, feldspar, and china clay), including pyrogenic silica, bentonite and other clays, and solid silicone resins, which are generally condensed branched polysiloxanes, such as a silicone resin comprising Q units of the formula SiO_{4/2} and M units of the formula R*^{m}*₃SiO_{1/2}, wherein the R*^{m}* substituents are selected from alkyl groups having 1 to 6 carbon atoms and the ratio of M units to Q units is in the range of 0.4:1 to 1:1. Some fillers such as fumed silica may have a thixotropic effect on the coating composition. The proportion of fillers may be in the range of from 0 to 25 wt%, based on the total weight of the coating composition. Preferably the clay is present in an amount of 0 to 1 wt% and preferably the thixotrope is present in an amount of 0 to 5 wt%, based on the total weight of the coating composition.

The coating composition may comprise pigments. Examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, chromium oxide, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes), or other so-called barrier pigments or anticorrosive pigments such as zinc dust or zinc alloys. The pigment volume concentration preferably is in the range of 0.5-25%. The proportion of pigments may be in the range of from 0 to 25 wt%, based on the total weight of the coating composition.

Suitable solvents for use in the coating composition include aromatic hydrocarbons, alcohols, ketones, esters, and mixtures of the above with one another or an aliphatic hydrocarbon. Further or alternatively, the coating compositions may comprise water. Preferable solvents include ketones such as methyl isopentyl ketone and/or xylene.

In a preferred embodiment, for environmental reasons, the coating composition of the present invention may be free or substantially free of biocide.

Alternatively, the coating composition of the present invention may comprise one or more biocide(s) or enzymes. The biocide may be one or more of an inorganic, organometallic, metal-organic or organic biocide for marine or freshwater organisms. Examples of inorganic biocides include copper salts such as copper oxide, copper thiocyanate, copper bronze, copper carbonate, copper chloride, copper nickel alloys, and silver salts such as silver chloride or nitrate; organometallic and metal-organic biocides include zinc pyrithione (the zinc salt of 2-pyridinethiol-1-oxide), copper pyrithione, bis (N-cyclohexyl-diazenium dioxy) copper, zinc ethylene-bis(dithiocarbamate) (i.e. zineb), zinc dimethyl dithiocarbamate (ziram), and manganese ethylene-bis(dithiocarbamate) complexed with zinc salt (i.e. mancozeb); and organic biocides include formaldehyde, dodecylguanidine monohydrochloride, thiabendazole, N-trihalomethyl thiophthalimides, trihalomethyl thiosulphamides, N-aryl maleimides such as N-(2,4,6-trichlorophenyl) maleimide, 3-(3,4-dichlorophenyl)-1,1-dimethylurea (diuron), 2,3,5,6-tetrachloro-4-(methylsulphonyl) pyridine, 2-methylthio-4-butylamino-6-cyclopopylamino-s-triazine, 3-benzo[b]thien-yl-5,6-dihydro-1,4,2-oxathiazine 4-oxide, 4,5-dichloro-2-(n-octyl)-3(2H)-isothiazolone, 2,4,5,6-tetrachloroisophthalonitrile, tolylfluanid, dichlofluanid, diiodomethyl-p-tosylsulphone, capsciacin, N-cyclopropyl-N'-(1,1-dimethylethyl)-6-(methylthio)-1,3,5-triazine-2,4-diamine, 3-iodo-2-propynylbutyl carbamate, medetomidine, 1,4-dithiaanthraquinone-2,3-dicarbonitrile (dithianon), boranes such as pyridine triphenylborane, a 2-trihalogenomethyl-3-halogeno-4-cyano pyrrole derivative substituted in position 5 and optionally in position 1, such as 2-(p-chlorophenyl)-3-cyano-4-bromo-5-trifluoromethyl pyrrole (tralopyril), and a furanone, such as 3-butyl-5-(dibromomethylidene)-2(5H)-furanone, and mixtures thereof, macrocyclic lactones such as avermectins, for example avermectin B1, ivermectin, doramectin, abamectin, amamectin and selamectin, and quaternary ammonium salts such as didecyldimethylammonium chloride and an alkyldimethylbenzylammonium chloride.

Examples of commercial enzymes are Savinase® (exNovozymes A/S), Endolase® (ex Novozymes A/S), Alcalase® (ex Novozymes A/S), Esperase® (ex Novozymes), Papain (ex Sigmaaldrich), Subtilisin Carlsberg (ex Sigmaaldrich), pectinase (ex Sigmaaldrich), and polygalacturonase (ex Sigmaaldrich).

If the coating composition comprises biocide or enzyme, we mean that the biocide or enzyme is present within the body of the dried, cured or crosslinked coating layer (in the sense that it was mixed in the coating composition prior to curing).

Optionally the coating composition comprises other substances known to have a fouling-release effect, for example the fluorinated alkyl- or alkoxy-containing polymer or oligomer described in WO 02/074870.

For example, the coating composition may also comprise an incompatible fluid or grease. In the context of the present invention an incompatible fluid means a silicone, organic or inorganic molecule or polymer, usually a liquid, but optionally also an organosoluble grease or wax, which is immiscible (either wholly or partly) with the coating layer. An example of an incompatible fluid is provided in WO2007/10274. In WO2007/10274, the incompatible fluid is a fluorinated polymer or oligomer in a polysiloxane coating.

Examples of suitable fluids are:
a) Linear and trifluoromethyl branched fluorine end-capped perfluoropolyethers (eg Fomblin Y®, Krytox K® fluids, or Demnum S® oils);
b) Linear di-organo (OH) end-capped perfluoropolyethers (eg Fomblin Z DOL®, Fluorolink E®);
c) Low MW polychlorotrifluoroethylenes (eg Daifloil CTFE® fluids)

In all cases the fluorinated alkyl-or alkoxy containing polymer or oligomer does not substantially take part in any cross-linking reaction. Other mono- and diorgano-functional end-capped fluorinated alkyl- or alkoxy- containing polymers or oligomers can also be used (eg carboxy-, ester- functional fluorinated alkyl- or alkoxy-containing polymers or oligomers).

Alternatively, the fluid can be a silicone oil, for example of the formula:

Q₃Si-O-(SiQ₂-O-)ₙSiQ₃

Where in each group Q represents a hydrocarbon chain having 1-10 carbon atoms and n is an integer such that the silicone oil has a viscosity of 20 to 5000 m Pa s. At least 10% of the groups Q are generally methyl groups and at least 2% of the groups Q are phenyl groups. Most preferably, at least 10% of the -SiQ₂-O- units are methyl-phenylsiloxane units. Most preferably the silicone oil is a methyl terminated poly(methylphenylsiloxane). The oil preferably has a viscosity of 20 to 1000 m Pa s. Examples of suitable silicone oils are sold under the trademarks Rhodorsil Huile 510V100 and Rhodorsil Huile 550 by Bluestar Silicones. The silicone oil improves the resistance of the coating system to aquatic fouling.

The fluid may also be an organosilicone of the formula:

P¹-Si(P²)₂-[-O-Si(P³)₂-]ₐ-[-O-Si(P3)(P4)-]_{b}-O-Si(P²)₂-P¹

wherein:
- P¹ may be the same or different and is selected from alkyl, aryl, and alkenyl groups, optionally substituted with an amine group, an oxygen-containing group of the formula OP⁵, wherein P⁵ is hydrogen or a C1-6 alkyl, and a functional group according the:-P⁶-N(P⁷)-C(O)-P⁸-C(O)-XP³
wherein:
- P⁶ is selected from alkyl, hydroxyalkyl, carboxyalkyl of 1 to 12 carbon atoms, and polyoxyalkylene of up to 10 carbon atoms;
- P⁷ is selected from hydrogen, alkyl, hydroxyalkyl, carboxyalkyl of 1 to 6 carbon atoms, and polyoxyalkylene of 1 to 10 carbon atoms; P⁷ may be bonded to P⁸ to form a ring;
- P⁸ is an alkyl group with 1-20 carbon atoms;
- P⁹ is hydrogen or an alkyl group with 1-10 carbon atoms, optionally substituted with oxygen- or nitrogen-containing groups;
- X is selected from O, S and NH;
- provided that at least one P¹-group in the organosilicone polymer is a functional group according to the above formula or a salt derivative thereof;
- P² may be the same or different and is selected from alkyl, aryl, and aklenyl;
- P³ and P⁴, which may be the same or different, are selected from alkyl, aryl, capped or uncapped polyoxyalkylene, alkaryl, aralkylene, and alkenyl;
- a is an integer from 0 to 50,000;
- b is an integer from 0 to 100; and
- a+b is at least 25.

In one embodiment
- P², P³ and P⁴ are independently selected from methyl and phenyl, more preferably methyl.
- P⁶ is an alkyl group with 1-12, more preferably 2-5 carbon atoms.
- P⁷ is hydrogen or an alkyl group with 1-4 carbon atoms.
- P⁸ is an alkyl group with 2-10 carbon atoms.
- P⁹ is hydrogen or an alkyl group with 1-5 carbon atoms.
- X is an oxygen atom.
- a+b ranges from 100 to 300.

In one embodiment the fluid is present in 0.01 to 10wt%, based on the total weight of the coating composition. Most preferably the fluid is present in the range of 2 to 7wt% based on the total weight of the coating composition.

The coating composition preferably has a solids content, defined as the weight percentage of involatile material in the coating composition, of at least 35 wt%, more preferably at least 50 wt%, even more preferably at least 70 wt%. The solids content can range up to 80 wt%, 90 wt%, 95 wt% and preferably up to 100 wt%.

The solid content may be determined in accordance with ASTM method D2697.

The coating composition can be applied by normal techniques, such as dipping, brush, roller, or spray (airless and conventional).

After the coating composition has cured/crosslinked, it can be immersed immediately and gives instant fouling release protection. The coating can be used for both dynamic and static structures, such as ship & boat hulls, buoys, drilling platforms, oil production rigs, a floating production storage and offloading vessel (FPSO), a floating storage and regasification unit (FSRU), a water inlet or outlet such as those used for cooling water in a power plant, a fish net or a fish cage and pipes which are immersed in water.

The coating composition can be applied on any substrate that is used for these structures, such as metal, concrete, wood or fiber-reinforced resin.

The coating composition is suitable for inhibiting fouling on the surface of a man-made structure in an aquatic environment and/or for use as an intermediate coating in a multilayer coating system. Another embodiment of the invention therefore is a fouling-release coating composition or an intermediate coating composition wherein the coating composition is defined herein.

Another embodiment of the invention relates to a substrate which is to be alternately immersed and unimmersed in water, for example a man-made structure such as a vessel hull, which has been coated according to the with the coating compositions and method described herein.

Another embodiment of the invention relates to a method of preventing fouling on a substrate in an aquatic environment by
a) providing a coating composition comprising curable or crosslinkable organosiloxane polymer, an organobismuth compound and a silane coupling agent (as herein described in further detail),
b) applying at least one layer of the coating composition to an aged coating layer on a substrate,
c) allowing the least one layers of coating composition to cure and/or crosslink to form a cured and/or crosslinked coating layer(s) on the substrate, and
d) locating the coated substrate in an aquatic environment.
wherein an aged coating layer is a coating layer applied more than 6 months previously.

Preventing the fouling on a substrate in an aquatic environment, should be understood to mean preventing the fouling of biofilms and/or aquatic organisms in the aquatic environment.

As demonstrated herein below, the least one coating layer(s) in the above noted method has better adhesion than if the coating layer(s) had been formed without the organobismuth compound, or if the organobismuth compound had been substituted with an organotin or organotitanate compound.

Another embodiment is the use of a coating composition as defined herein, as a coating on a substrate already coated with an aged coating layer for preventing the fouling of biofilms and/or aquatic organisms in an aquatic environment, wherein an aged coating layer is a coating layer applied more than 6 months previously.

It should be understood that any of the ranges, values, or characteristics given for any single component or any single embodiment of the present disclosure can be used interchangeably with any ranges, values or characteristics given for any of the other components or embodiments of this disclosure.

### Examples

### Examples A-F

Coating composition Examples A-F were prepared by weighing off accurately each component (on a 2 decimal place balance) into an appropriate metal container and sealing with an air tight lid. The coatings were then mixed together using a pallet knife 1 minute before application to the substrate via brush. The components are listed in Table 1 Example B is in accordance with the invention. The other examples are comparative examples.

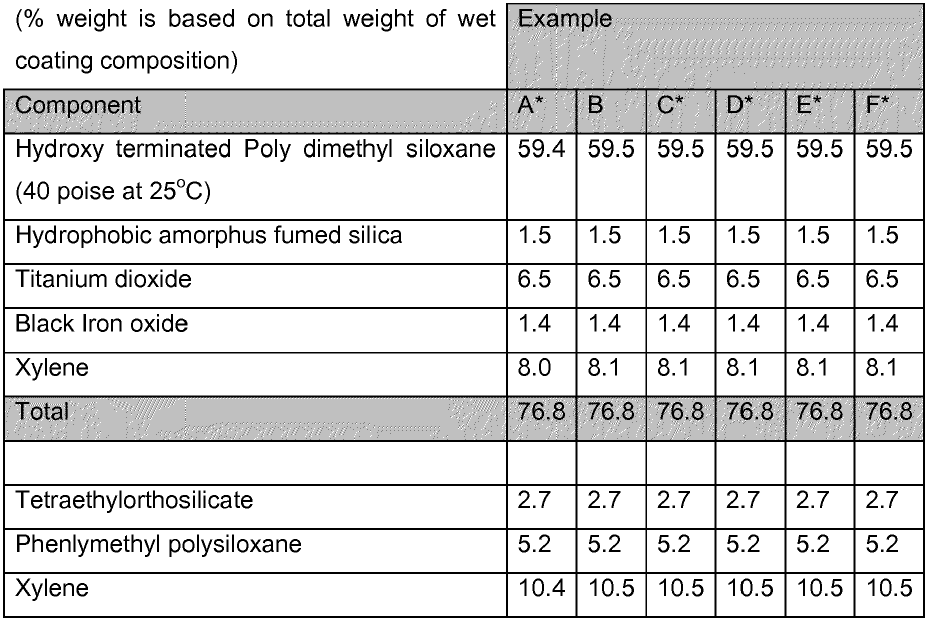

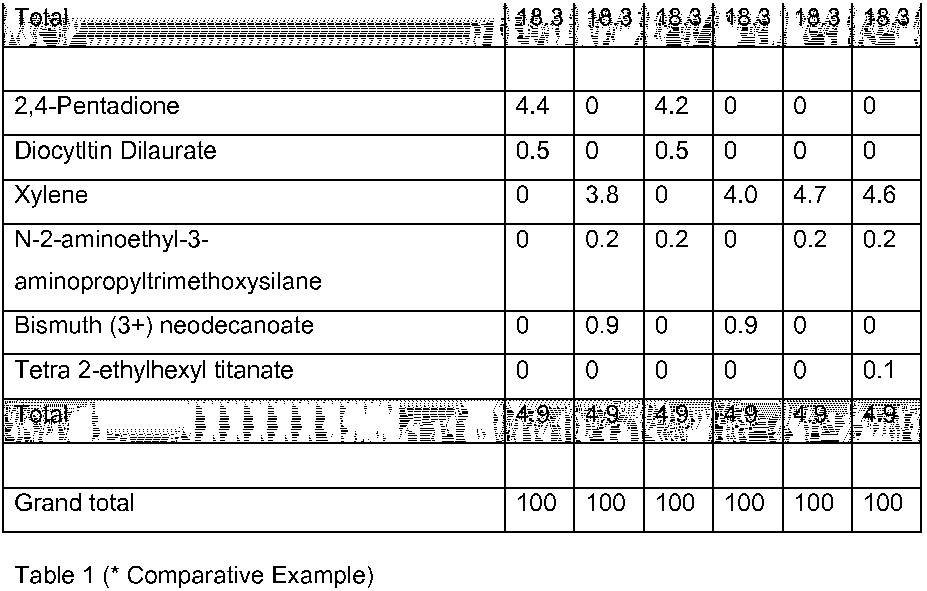

A raft located in Hartlepool marina, UK, was coated with a foul-release system (Intersleek 757 available from International Paint Ltd.) more than 5 years previously. Multiple sections of it's non-permanently immersed areas, representative of the boot-top regions of a vessel, were selected. These areas were washed with fresh water and allowed to dry. The selected areas were then coated with a foul-release system A to F and allowed to dry. Two days after application of the coatings A to F, the adhesion of the new coating to the existing substrate was assessed by the ADHESION TEST. The results of the assessment in accordance with the adhesion test are shown in Table 2.

### The ADHESION TEST

The adhesion test is carried out on the coating 48 hours after application and the drying of the coating to the substrate. The test is carried out by cutting an X into the coating with a knife. The X was then rubbed with a rag to highlight any weakness in adhesion between the two coatings and the intercoat-adhesion was given a score from 0-5, using the rating system shown in table 3.

### Test Results

**Table 2**

| **Coating** | Tin compound-Dioctyltin Dilaurate | Organobismuth compound-Bismuth neodecanoate | Silane coupling agent-3-N-2-aminoethyl-3-aminopropyltrim ethoxysilare | Titanate compound-Tetra 2-ethylhexyl titanate | **Adhesion result** |
|---|---|---|---|---|---|
| A | Yes | No | No | No | 0 |
| B | No | Yes | Yes | No | 5 |
| C | Yes | No | Yes | No | 2 |
| D | No | Yes | No | No | 0 |
| E | No | No | Yes | No | 2 |
| F | No | No | Yes | Yes | 2 |

**Table 3**

| **Adhesion Rating** | **Description of Adhesion** |
|---|---|
| 5 | Perfect adhesion - unable to determine an interface between coatings |
| 4 | Good adhesion - able to determine an interface with some effort |
| 3 | Fair adhesion - able to determine an interface with rubbing |
| 2 | Poor adhesion |
| 1 | Very poor adhesion |
| 0 | No adhesion |

The results demonstrate that the coating comprising an organobismuth compound in combination with a silane coupling agent (Example B) has superior adhesion performance compared to coatings containing neither or only one of these components in combination with an additional/alternative titanate or tin catalyst.

## Claims

1. A method of coating an aged coating layer on a substrate by
a) providing a coating composition comprising curable or crosslinkable organosiloxane polymer, an organobismuth compound and a silane coupling agent,
b) applying a layer of the coating composition to an aged coating layer on a substrate, and
c) allowing the coating composition to cure and/or crosslink to form a cured and/or crosslinked coating layer,
wherein an aged coating layer is a coating layer applied more than 6 months previously.

2. The method of claim 1 wherein the aged coating layer comprises a cured or crosslinked organosiloxane polymer.

3. The method of any preceding claim wherein the cured coating layer formed in step c) is a fouling-release coating capable of inhibiting fouling in an aquatic environment.

4. The method of any preceding claim wherein the aged coating layer is an aged fouling-release coating layer located on a region of a man-made structure which is to be alternately immersed and unimmersed in water , for example on a hull of a vessel.

5. The method of any preceding claim wherein the cured coating layer formed in step c) is further coated with one or more layer(s) of coating composition.

6. The method of any preceding claim wherein the silane coupling agent is an amino or an epoxy functional silane.

7. The method of Claim 6 wherein the silane coupling agent is an amino functional silane comprising C₂-C₁₀-alkoxy groups.

8. The method of any preceding claim wherein the silane coupling agent is an aminosilane such as N-2-aminoethyl-3-aminopropyltrimethoxysilane.

9. The method of any preceding claim wherein the organobismuth compound is a carboxylate of bismuth, for example, bismuth neodecanoate.

10. The method of any preceding claim wherein the coating composition comprises 0.2-2.0 weight% of the organobismuth compound and 0.1-1.0 weight % of the silane coupling agent, wherein weight is based on the total weight of the coating composition.

11. The method of any preceding claim wherein the curable organosiloxane polymer comprises a repeating unit of the general structure -[SiR¹R²-O]-, wherein R¹ and R² are independently selected from hydrogen, alkyl, aryl, aralkyl, and a vinyl group.

12. The method of Claim 11 wherein R¹ and R² are independently selected from methyl and phenyl, preferably wherein R¹ and R² are methyl.

13. A substrate which is to be alternately immersed and unimmersed in water, for example a vessel hull, which has been coated according to the method of any of claims 1 to 12.

14. A method of preventing fouling on a substrate in an aquatic environment by
a) providing a coating composition comprising curable or crosslinkable organosiloxane polymer, an organobismuth compound and a silane coupling agent,
b) applying at least one layer of the coating composition to an aged coating layer on a substrate,
c) allowing the least one layers of coating composition to cure and/or crosslink to form a cured and/or crosslinked coating layer(s) on the substrate, and
d) locating the coated substrate in an aquatic environment.
wherein an aged coating layer is a coating layer applied more than 6 months previously.

15. Use of a coating composition as defined in any of claims 1 to 3 or 6 to 12 as a coating on a substrate already coated with an aged coating layer for preventing the fouling of biofilms and/or aquatic organisms in an aquatic environment, wherein an aged coating layer is a coating layer applied more than 6 months previously.

## Patentansprüche

1. Verfahren zum Beschichten einer gealterten Beschichtung auf einem Substrat durch
a) Bereitstellen einer Beschichtungszusammensetzung mit härtbarem oder vernetzbarem Organosiloxan-Polymer, einer Organobismut-Verbindung und einem Silan-Kopplungsmittel,
b) Aufbringen einer Schicht der Beschichtungszusammensetzung auf eine gealterte Beschichtung auf einem Substrat, und
c) Ermöglichen, dass die Beschichtungszusammensetzung aushärtet und/oder sich vernetzt, um eine gehärtete und/oder vernetzte Beschichtung zu bilden,
wobei eine gealterte Beschichtung aus einer mehr als 6 Monate zuvor aufgebrachten Beschichtung besteht.

2. Verfahren nach Anspruch 1, wobei die gealterte Beschichtung ein gehärtetes oder vernetztes Organosiloxan-Polymer umfasst.

3. Verfahren nach einem vorhergehenden Anspruch, wobei die in Schritt c) gebildete, gehärtete Beschichtung eine Bewuchs lösende Beschichtung ist, die Bewuchs in einem aquatischen Milieu verhindern kann.

4. Verfahren nach einem vorhergehenden Anspruch, wobei die gealterte Beschichtung aus einer gealterten, Bewuchs lösenden Beschichtung besteht, die an einem Bereich einer künstlich hergestellten Struktur liegt, welche sich abwechselnd unter Wasser und über Wasser befindet, beispielsweise an einem Rumpf eines Schiffes.

5. Verfahren nach einem vorhergehenden Anspruch, wobei die in Schritt c) gebildete, gehärtete Beschichtung weiterhin mit einer oder mehr Schicht(en) einer Beschichtungszusammensetzung beschichtet wird.

6. Verfahren nach einem vorhergehenden Anspruch, wobei das Silan-Kopplungsmittel aus einem Amino- oder einem Epoxid-funktionellen Silan besteht.

7. Verfahren nach Anspruch 6, wobei das Silan-Kopplungsmittel ein Aminofunktionelles Silan mit C₂-C₁₀-Alkoxygruppen ist.

8. Verfahren nach einem vorhergehenden Anspruch, wobei das Silan-Kopplungsmittel aus einem Aminosilan, wie z.B. N-2-Aminoethyl-3-Aminopropyltrimethoxysilan, besteht.

9. Verfahren nach einem vorhergehenden Anspruch, wobei die Organobismut-Verbindung ein Carboxylat von Bismut, beispielsweise Bismutneodecanoat, ist.

10. Verfahren nach einem vorhergehenden Anspruch, wobei die Beschichtungszusammensetzung 0,2-2,0 Gew-% der Organobismut-Verbindung und 0,1-1,0 Gew-% des Silan-Kopplungsmittels umfasst, wobei das Gewicht auf das Gesamtgewicht der Beschichtungszusammensetzung bezogen ist.

11. Verfahren nach einem vorhergehenden Anspruch, wobei das härtbare Organosiloxan-Polymer eine wiederkehrende Einheit der allgemeinen Struktur -[SiR¹R²-O]- umfasst, wobei R¹ und R² unabhängig aus Wasserstoff, Alkyl, Aryl, Aralkyl und einer Vinylgruppe ausgewählt sind.

12. Verfahren nach Anspruch 11, wobei R¹ und R² unabhängig aus Methyl und Phenyl ausgewählt sind, wobei vorzugsweise R¹ und R² aus Methyl bestehen.

13. Substrat, das sich abwechselnd unter Wasser und über Wasser befinden soll, beispielsweise ein Schiffsrumpf, der nach dem Verfahren nach einem der Ansprüche 1 bis 12 beschichtet worden ist.

14. Verfahren zur Verhinderung von Bewuchs auf einem Substrat in einem aquatischen Milieu durch
a) Bereitstellen einer Beschichtungszusammensetzung mit härtbarem oder vernetzbarem Organosiloxan-Polymer, einer Organobismut-Verbindung und einem Silan-Kopplungsmittel,
b) Aufbringen von mindestens einer Schicht der Beschichtungszusammensetzung auf eine gealterte Beschichtung auf einem Substrat,
c) Ermöglichen, dass die mindestens eine Schicht der Beschichtungszusammensetzung aushärtet und/oder sich vernetzt, um (eine) gehärtete und/oder vernetzte Beschichtung(en) auf dem Substrat auszubilden, sowie
d) Anordnen des beschichteten Substrats in einem aquatischen Milieu,
wobei eine gealterte Beschichtung aus einer mehr als 6 Monate zuvor aufgebrachten Beschichtung besteht.

15. Verwendung einer Beschichtungszusammensetzung, wie in einem der Ansprüche 1 bis 3 oder 6 bis 12 definiert, als eine Beschichtung auf einem bereits mit einer gealterten Beschichtung beschichteten Substrat, um den Bewuchs von Biofilmen und/oder Wasserorganismen in einem aquatischen Milieu zu verhindern, wobei eine gealterte Beschichtung aus einer mehr als 6 Monate zuvor aufgebrachten Beschichtung besteht.

## Revendications

1. Procédé de revêtement d'une couche de revêtement vieillie sur un substrat par
a) la fourniture d'une composition de revêtement comprenant un polymère d'organosiloxane durcissable ou réticulable, un composé d'organobismuth et un agent de couplage à base de silane,
b) l'application d'une couche de la composition de revêtement sur une couche de revêtement vieillie sur un substrat, et
c) le fait de permettre à la composition de revêtement de durcir et/ou de se réticuler afin de former une couche de revêtement durcie et/ou réticulée,
dans lequel une couche de revêtement vieillie est une couche de revêtement appliquée plus de 6 mois auparavant.

2. Procédé selon la revendication 1 dans lequel la couche de revêtement vieillie comprend un polymère d'organosiloxane durci ou réticulé.

3. Procédé selon une quelconque revendication précédente dans lequel la couche de revêtement durcie formée dans l'étape c) est un revêtement anti-salissures capable d'inhiber la salissure dans un environnement aquatique.

4. Procédé selon une quelconque revendication précédente dans lequel la couche de revêtement vieillie est une couche de revêtement anti-salissures vieillie située sur une région d'une structure fabriquée par l'homme qui doit être en alternance immergée et non immergée dans de l'eau, par exemple une coque d'un navire.

5. Procédé selon une quelconque revendication précédente dans lequel la couche de revêtement durcie formée dans l'étape c) est revêtue en outre avec une ou plusieurs couche(s) de composition de revêtement.

6. Procédé selon une quelconque revendication précédente dans lequel l'agent de couplage à base de silane est un silane à fonction amino ou époxy.

7. Procédé selon la revendication 6 dans lequel l'agent de couplage à base de silane est un silane à fonction amino comprenant des groupes alcoxy en C₂ à C₁₀.

8. Procédé selon une quelconque revendication précédente dans lequel l'agent de couplage à base de silane est un aminosilane tel que le N-2-amino-éthyl-3-aminopropyltriméthoxysilane.

9. Procédé selon une quelconque revendication précédente dans lequel le composé d'organobismuth est un carboxylate de bismuth, par exemple, le néodécanoate de bismuth.

10. Procédé selon une quelconque revendication précédente dans lequel la composition de revêtement comprend 0,2 à 2,0 % en poids du composé d'organobismuth et 0,1 à 1,0 % en poids de l'agent de couplage à base de silane, dans lequel le poids est basé sur le poids total de la composition de revêtement.

11. Procédé selon une quelconque revendication précédente dans lequel le polymère d'organosiloxane durcissable comprend un motif répétitif ayant la structure générale -[SiR¹R²-O]-, dans laquelle R¹ et R² sont choisis indépendamment parmi un hydrogène, un alkyle, un aryle, un aralkyle et un groupe vinyle.

12. Procédé selon la revendication 11 dans lequel R¹ et R² sont choisis indépendamment parmi un méthyle et un phényle, de préférence dans lequel R¹ et R² sont un méthyle.

13. Substrat qui doit être en alternance immergé et non immergé dans l'eau, par exemple la coque d'un navire, qui a été revêtu selon le procédé selon l'une quelconque des revendications 1 à 12.

14. Procédé de prévention de la salissure sur un substrat dans un environnement aquatique par
a) la fourniture d'une composition de revêtement comprenant un polymère d'organosiloxane durcissable ou réticulable, un composé d'organobismuth et un agent de couplage à base de silane,
b) l'application d'au moins une couche de la composition de revêtement sur une couche de revêtement vieillie sur un substrat,
c) le fait de permettre à l'au moins une couche de la composition de revêtement de durcir et/ou de se réticuler afin de former une ou plusieurs couche(s) de revêtement durcie(s) et/ou réticulée(s) sur le substrat, et
d) le placement du substrat revêtu dans un environnement aquatique,
dans lequel une couche de revêtement vieillie est une couche de revêtement appliquée plus de 6 mois auparavant.

15. Utilisation d'une composition de revêtement telle que définie dans l'une quelconque des revendications 1 à 3 ou 6 à 12 en tant que revêtement sur un substrat déjà revêtu avec une couche de revêtement vieillie pour prévenir la salissure par des biofilms et/ou des organismes aquatiques dans un environnement aquatique, dans laquelle une couche de revêtement vieillie est une couche de revêtement appliquée plus de 6 mois auparavant.
